# EUROPEAN PATENT APPLICATION

(11) **EP 2 608 052 A2**
(43) Date of publication of application: **26.06.2013**
(21) Application number: 12197220.2
(22) Date of filing: 14.12.2012
(51) Int. Cl.: G06F 17/27

(54) **Method for dynamically generating group-related personalized dictionaries**

(30) Priority: 19.12.2011 US 201113330636
(71) Applicant: Telefonaktiebolaget L M Ericsson (Publ), 164 83 Stockholm (SE)
(72) Inventor: Xing, Bo, Fremont, CA 94555 (US); Hjelm, Johan, Tokyo, 165-0025 (JP)
(74) Representative: HOFFMANN EITLE

(57) **Abstract**

A user device communicates with a network server that has access to one or more knowledge sources. Based on a current situational context for a user of the device, the network server dynamically generates a group-related personalized dictionary using information retrieved from the knowledge sources and provides the dictionary to the user device. Applications executing on the user device can then use the dictionary to suggest or predict words, terms, or symbols to the user in response to receiving user input.

## Description

### FIELD OF THE INVENTION

The present invention relates to consumer electronic devices having application environments that support the use of one or more software-based knowledge sources, such as a dictionary.

### BACKGROUND

Currently, there are many applications (e.g., text messaging, browsers, word processors, etc.) and application environments (e.g., mobile operating systems such as WINDOWS MOBILE and ANDROID) that support auto-fill functionality. As is known in the art, auto-fill functionality is where an application executing on a device predicts or suggests a word or phrase that a user is likely entering. The predictions are usually based on the alphanumeric text already input by the user and a pre-defined dictionary of words and terms that is available to the device.

Conventionally, any given device has only one dictionary. Some applications may apply their own, independent dictionaries, but the device dictionary is the one most frequently applied when text is being entered by a user. Suggestions for words and terms made by a dictionary are especially useful when they are based on user context. Thus, the dictionaries for devices such as mobile devices, for example, should ideally be aware of things like the current date and location, information in the user's profile, and the activities and communication behavior of the user. For example, if a user enters the letters "va" into an application, a dictionary may suggest the term "Valentine" if the current date is on or near February 14. However, once Valentines Day has passed, that same dictionary may suggest the term "Virginia" if the user is in or near Washington D.C.

Additionally, there are many different domains of knowledge having a corpus of common words that may be used by dictionaries. The prioritized suggestion of such words and terms would be beneficial for practitioners upon entering text into an application. For example, consider a user that enters the letters "app" into a text messaging application. If the user is an occultist, the dictionary may suggest the word "apparition." However, if the user were a software developer, the dictionary may suggest the term "application." Similarly, the term "apparel" may be suggested to a user who is a garment designer. Current systems, however, do not adequately address such functionality.

Conventional wisdom assumes that most dictionaries are provisioned once and then not updated. However, there are methods for updating and enhancing the dictionaries used by both the device and the individual applications. For example, some dictionaries can be updated by simply downloading an updated version from a centralized server, although this does not occur very often. Others, however, can be updated with words and terms based on contextual information that pertains to a user. Such information could be provided by the user's profile, determined activities, and readings provided by various sensors, such as the user's location as provided by location determining circuitry.

Although useful, current technology does not allow for the dynamic creation and distribution of dictionaries and other software-based knowledge sources that represent a lexicon utilized by smaller groups of people. That is, even though groups of people may not represent a vertical group (e.g., occultists, mathematicians), they may still have quite a lot in common. Such groups may be, for example, an intersection of the people that are in two or more vertical groups, a user-defined group of users communicating via their mobile devices (e.g., group call or video conference call), or a group of users communicating via a social networking site such as FACEBOOK. Dictionaries tailored to such smaller groups of users would be useful; however, current technologies do not provide methods to identify such groups and dynamically provide dictionaries that are adapted to, and updated specifically for, such groups. Moreover, many such groups use different social dialects or sociolects. Current solutions are not capable of discerning and accounting for the differences between such sociolects.

### SUMMARY

The present invention provides a system and method for dynamically generating group-related, personalized digital dictionaries for a user device. In one or more embodiments, a server communicatively connects to a user device and one or more knowledge sources via a communications network, and is configured to provide the user device with a digital dictionary. More particularly, the server receives a vector of contextual features from the user device along with a request to generate the dictionary. Additionally, or alternatively, the server may receive the vector of contextual features, or information to be included in or referenced by the vector of contextual features, from one or more other network servers. Based on the information provided in, and/or referenced by, the vector, the server determines a situational context for a user. The determined context includes the identity of a user group to which the user is currently assigned.

Based on the determined situational context, the server retrieves one or more terms from one or more different knowledge sources (e.g., dictionaries). The server then dynamically generates the dictionary from the retrieved terms and provides the dictionary to the user device. Upon receipt, user applications executing on the user device can consult the dictionary when performing an "auto-fill" function to suggest or predict words, terms, sounds, or symbols, for example, in response to receiving user input.

In one embodiment, the network server comprises a first communications interface to communicate information with a user device, a second communications interface to retrieve data from one or more network sources, and a programmable controller communicatively connected to both the first and second communications interfaces. The controller is configured to determine a situational context for a user including a user group to which the user is currently assigned, retrieve one or more terms from the one or more network sources based on the situational context, generate a group-related personalized dictionary from the retrieved terms, and provide the dictionary to the user device.

In another embodiment, the present invention also provides a user device configured to dynamically request a group-related personalized dictionary from the network server, and provide the information needed by the network server to generate the requested dictionary. Particularly, the user device is configured to detect a predetermined event at the user device. In response to detecting the event, the user device generates a request to a network server for a group-related personalized dictionary. The request includes a vector of information that identifies a user's situational context, including a user group to which the user currently belongs. After the user device receives the dictionary from the network server, which is comprised of one or more terms associated with the user's situational context, user applications executing on the device can consult the dictionary to suggest or predict a variety of different words, terms, sounds, and symbols, for example, to the user based on the user's input. The terms suggested are based on the user's current situational context.

To perform this aspect of the present invention, a user device comprises a communications interface to communicate data between the user device and a network server, a display, a user interface to receive user input, and a controller. In one embodiment, the controller is programmed to generate a request to the network server for the digital dictionary. The request identifies a user's situational context including a user group to which the user currently belongs. The user device receives the dictionary, which contains terms that are selected based on the user's situational context, from the network server. Upon receipt, the user device displays selected terms in the dictionary on the display based on user input and the user's situational context.

Of course, those skilled in the art will appreciate that the present invention is not limited to the above contexts or examples, and will recognize additional features and advantages upon reading the following detailed description and upon viewing the accompanying drawings.

### BRIEF DESCRIPTION OF THE DRAWINGS

Figure 1 is a functional block diagram illustrating the architecture of an exemplary communications system suitable for use in one or more embodiments of the present invention.

Figure 2 is a flow chart illustrating a method of dynamically generating a group-related personalized digital dictionary according to one embodiment of the present invention.

Figure 3 is a functional block diagram illustrating some of the components of a user device configured to obtain a dynamically generated group-related personalized digital dictionary according to one embodiment of the present invention.

Figure 4 is a flow chart illustrating a method of obtaining a dynamically generated group-related personalized digital dictionary at a user's device based on a determined situational context according to one embodiment of the present invention.

Figure 5 is a functional block diagram of a network server configured to dynamically generate a group-related personalized digital dictionary for a user device according to one embodiment of the present invention.

Figure 6 is a flow chart illustrating a method of dynamically generating a group-related personalized digital dictionary for a user device based on a determined situational context according to one embodiment of the present invention.

Figure 7 is a flow chart illustrating a method for retrieving information for use in determining a user's situational context according to one or more embodiments of the present invention.

Figure 8 is a flow chart illustrating a method for selecting terms that will be used to dynamically generate the digital dictionary according to one embodiment of the present invention.

### DETAILED DESCRIPTION

The present invention provides a system and method for dynamically generating group-related, personalized digital dictionaries for a user device. The dictionaries, which are generated in a network server and downloaded to the user device, are device dictionaries that will be available to all applications executing on the device that require the use of a dictionary. However, contrary to conventional device dictionaries, the digital dictionaries of the present invention are dynamically generated based on a user's current situational context.

More specifically, the user's device provides the network server with information identifying its current situational context. Such information, as described in more detail below, includes data describing a user's current environment and the user's associations to one or more groups. The network server may also obtain information about the user's situational context from other sources. Based on this information, the network server retrieves one or more terms from one or more different lexica and combines them to form the device dictionary. As the user's situational context changes, such as if the user ends a chat session with the members of a first group and opens a chat session with the members of a different group, the network server will, based on the changing situational parameters, update the device dictionary, or dynamically generate a brand new device dictionary for downloading to the device.

Additionally, or alternatively, the network server may dynamically generate a smaller, more personalized dictionary on the user's changing situational parameters to complement the typically larger device dictionary. In such cases, an application could, for example, consult the smaller personalized dictionary first to locate a desired term, sound, or symbol. Then, if an appropriate term, sound, or symbol cannot be found, the application could expand the search and consult the larger device dictionary.

The present invention provides benefits not realized by conventional methods of generating device dictionaries. For example, conventional device dictionaries are usually pre-provisioned with words and seldom updated. Further, conventional dictionaries are specifically constructed to apply to all, if not most, users without any regard as to their specific needs or uses. However, because the present invention builds dictionaries based on, and dynamically adapts to, a user's specific often-changing situational context, it provides a smoother user experience and is much more useful to a user than a set of pre-canned terms.

The present invention is also suitable for use in data mining applications. For example, a given suspect's situational context may reveal that the suspect is engaged in illegal activity, such as drug trafficking or terroristic activities. In these cases, the suspect may utilize unusual terms or symbols, for example, when chatting with another person engaged in the same or similar activity. Organizations directed to preventing such activities, such as the police, can mine these words to better learn what situations a user (e.g., a suspect) may utilize such terms.

The present invention is also beneficial for use in voice and handwriting recognition applications. Generally, such applications will normally need to narrow down a set of words based on such input and conclude which words will come next. With the present invention, a device can focus the search for the current or next words on a more specific area of interest, which is based on the user's current situational context, and thus, provide the user with words that are more likely to be used in the current context. Another beneficial use is in automated translation. More particularly, with the present invention, applications that translate documents from one language into another much more accurately because the words and terms for the translation can be more accurately determined based on the context.

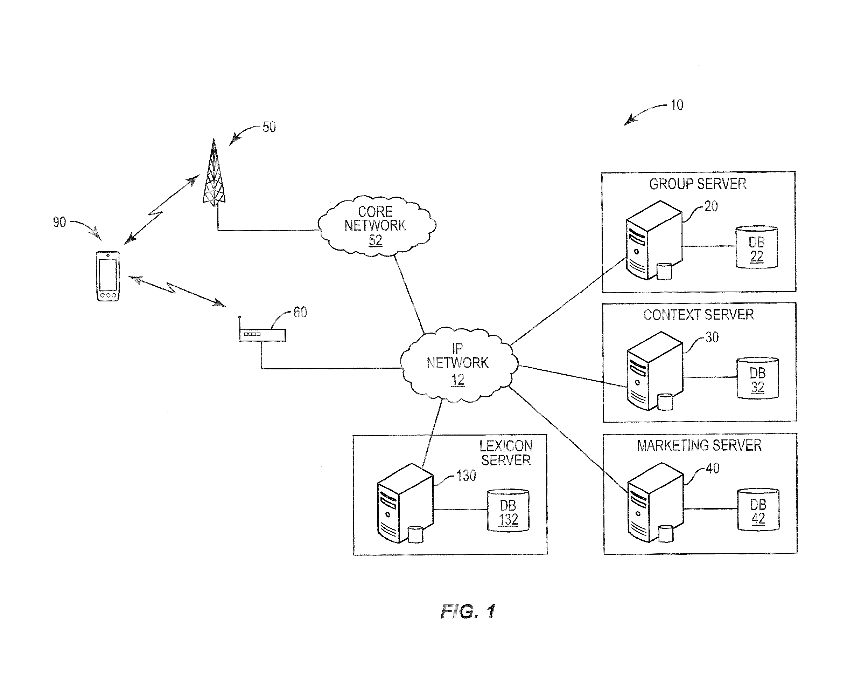

Turning now to the drawings, Figure 1 is a functional block diagram illustrating a communications system that is suitable for use in one embodiment of the present invention. As seen in Figure 1, the system 10 comprises an IP network 12, such as the Internet, connected to a Group Server (GS) 20, a Context Server (CS) 30, a Marketing Server (MS) 40, and a Lexicon Server (LS) 130. Additionally, the IP network 12 also connects to a user device 90, which in Figure 1 is illustrated as a cellular telephone, via a Radio Access Network (RAN) 50 and Core Network (CN) 52, and/or a Wireless Access Point (WAP) 60. As described in more detail below, the LS 130 utilizes the knowledge sources associated with the different servers, and dynamically builds (or updates) a group-related, personalized digital dictionary for the user device 90 based on the situational context of the user of device 90.

The GS 20 generally comprises one or more computing devices connected to a memory device, illustrated in Figure 1 as database (DB 22). The DB 22 may be internal or external to the GS 20, but stores information that allows the GS 20 to manage and maintain both public and private groups and group lists. Generally, a communication application executing on user terminal 90 may create groups for the user, as well as retrieve group lists for groups joined by the user. Although not specifically seen in the figures, those of ordinary skill in the art will appreciate that the GS 20 may be combined with a presence server (not shown) configured to provide presence notifications.

The CM 30 also comprises one or more computing devices connected to a DB 32, which may comprise memory that is internal to CS 30, or an external storage device. The DB 32 stores information and data related to a variety of different subjects. Based on this information, the CM 30 can determine the context of data associated with a first application and use it to link to the data that used by a second, different application that also contains data related to the same or similar context. For example, the data may comprise a social graph associated with a social networking application in which the nodes of the graph represent different people. Based on the information included in the DB 32, the CM 20 may determine the context of the graph based on the proximity of the user to the other people in the graph. This allows the CM 20 to determine, for example, whether the user has the same or similar sociolect (i.e., a language or social dialect used by a particular social group) as another targeted user.

The MS 40 comprises one or more computing devices, and is also connected to a DB 42. The DB 42 stores information that allows service providers to target specific advertisements to a group of users. The ability to effectively target groups of people with specific advertising campaigns allows service providers to generate further revenue, and thus, further monetize their systems.

The user device 90, as stated above, may be a communications device. As will be seen in more detail later, device 90 includes a Lexicon Selector module. According to the present invention, the Lexicon Selector module initiates requests to the LS 130 for new dynamically generated dictionaries, communicates one or more parameters indicating the user's current situational context to the LS 130, and downloads and provisions the resultant digital dictionaries on device 90. Once downloaded and installed, different applications executing on device 90 can access the content of the downloaded dictionary for use in their specific functions.

As seen in Figure 1, device 90 comprises a cellular telephone that connects to the IP network 12 via the RAN 50 and CN 52, and/or the WAP 60. In one embodiment, the RAN 50 comprises 3GPP Long Term Evolution (LTE) enhancements to a Universal Mobile Telecommunications System (UMTS). The WAP 60 may comprise, for example, a router that is part of a home network. As is known in the art, such devices typically connect to the Internet and provide wireless services to device 90.

Although only one type of technology for the RAN 50 is specified, those skilled in the art will readily appreciate that RAN 50 is not limited solely to this type of technology. Alternatively, RAN 50 may comprise a wireless access network that operates according to any known standard including, but not limited to, the standards known as the Global System for Mobile Communications (GSM), General Packet Radio Service (GPRS), TIA/EIA-136, cdmaOne (IS-95B), cdma2000, and Wideband CDMA (W-CDMA).

The network entities in Figure 1 (i.e., the GS 20, CM 30, and MS 40) all perform their intended conventional functions. However, in addition to those functions, the data stored by these entities is also utilized for another purpose. Specifically, the present invention utilizes the data stored in the respective databases (i.e., 22, 32, 42) to determine a user's current situational context. This context, in turn, is used by the LS 130 to dynamically generate a group-related personalized dictionary for device 90, or to update an existing group-related personalized dictionary already resident on device 90.

More particularly, the LS 130 comprises one or more computing devices connected to one or more databases (DBs) 132, which store a set of lexica. The lexica may comprise, for example, one or more dictionaries containing words, phrases, symbols, graphics, and sounds. Each lexicon can correspond to a contextual feature associated with the user. For example, some lexica may contain terms related to one or more occupations, while others relate to specific dates (e.g., Valentines Day, Christmas, Thanksgiving, etc.). Other lexica may contain terms specific to a given region (including the landmark keywords and trending keywords), or to applications executed by the user on device 90, or to certain web pages or web sites visited by the user of device 90.

Each lexicon may be organized in any manner known in the art. However, in one embodiment, each entry in a lexicon is a keyword with a list of associated labels for that contextual feature. By way of example, the keyword "apparel" may be associated with the phrase "garment designer" in the Occupation lexicon. Similarly, the keyword "Exploratorium" could be associated with the phrase "Bay Area" in the region lexicon. The keyword "Valentine" may be associated with the date entry "February 14" in the date lexicon, while the keyword "ROVIO" may be associated with a computer game such as "ANGRY BIRDS" in an application lexicon.

The lexica may also comprise a combination of predefined and dynamically-updated vocabulary. For example, predefined entries may be those that are generally popular in the corresponding circumstance (e.g., "Valentines" is associated with "February 14"), while other entries are learned dynamically based on information gleaned from external sources, such as TWITTER, and/or the usage patterns of the users (e.g., some keywords will be popular for certain amounts of time and used in particular circumstances).

Additionally or alternatively, the lexica may be bases on the content of one or more web pages that are visited by the user. For example, the user could visit a first web page having a first content. The user's situational context would then be at least partially defined by that content, and thus, device 90 might receive a dictionary having terms, phrases, sounds, symbols, etc., associated with the content of that web page. However, the user's situational context may change when the user visits another different web page because the user is viewing different content. In these cases, device 90 could receive a second dictionary that may include one or more terms, phrases, sounds, symbols, etc. that are different from those of the first dictionary and associated with the content of the different web page.

In one embodiment, the LS 130 receives input data describing a user's current situational context. This may include, for example, a user's association with one or more groups and other contextual parameters, such as the user's job description, location, etc. Whenever a user of device 90 needs such a dictionary, it provides the LS 130 with these input parameters. The LS 130 then uses these parameters to dynamically create a dictionary from the lexica that is specific to the user's current situation, and provides the dictionary to device 90.

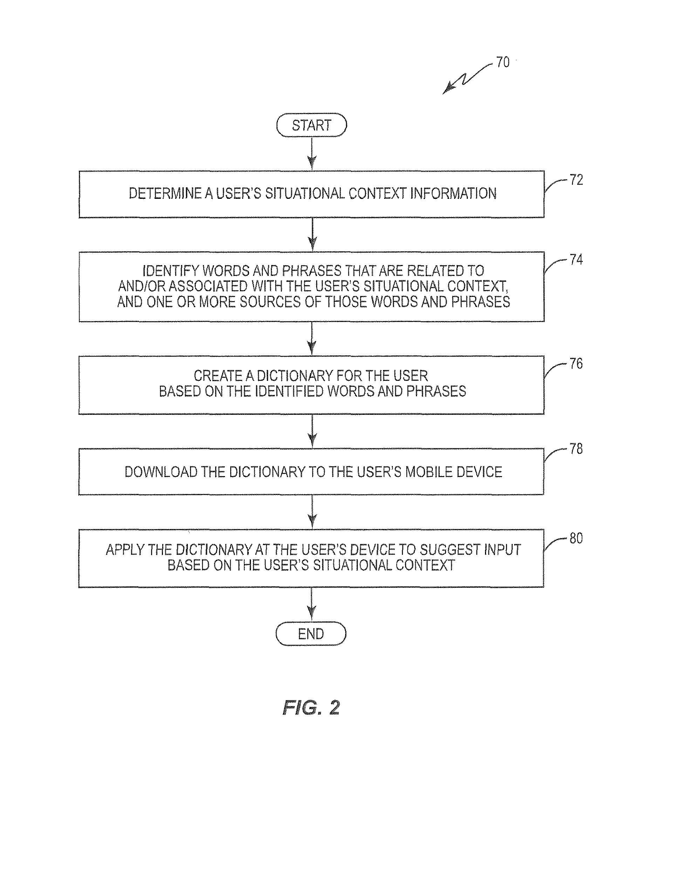

Figure 2 is a flow chart illustrating a method 70 of performing the present invention in one embodiment in more detail. Specifically, the method 70 begins with the LS 130 determining a user's current situational context information (box 72). This may be accomplished, as described in more detail below, using the situational context parameters provided to the LS 130 by device 90. The LS 130 then tries to identify words, phrases, symbols, graphics, and other artifacts that are related to and/or associated with the determined situational context, as well as the sources (i.e., the GS 20, CM 30, and MS 40) for those artifacts (box 74). Once identified, the LS 130 dynamically creates the dictionary (box 76) and downloads the dictionary to the user's device 90 (box 78). The user's device 90, upon receipt of the dictionary, can then utilize the dictionary to recommend words to the user based on the user's situational context (box 80).

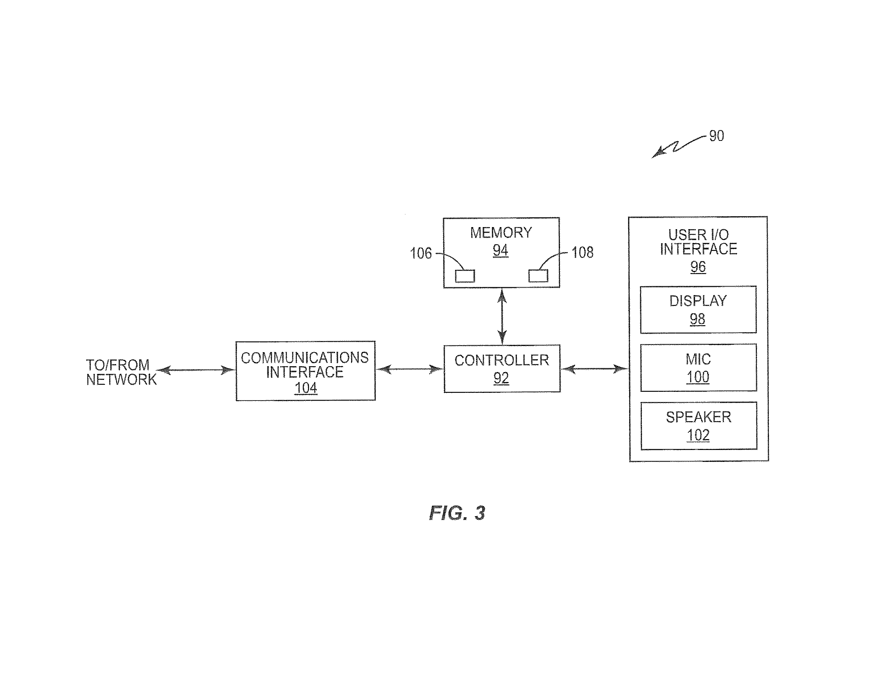

Figure 3 is a functional block diagram illustrating the components of a user device 90 configured to operate according to the preset invention. As seen in Figure 3, the device 90 comprises a programmable controller 92, a memory 94, a user I/O interface 96, and a communications interface 104. Controller 92 may, for example, be any of a variety of one or more programmable microprocessors that are configured to control the operation of the user device 90 according to instructions and data stored in memory 92. As is known in the art, such instructions include the code necessary for performing communications functions, such as the transmitting and receiving data from IP network 12. However, in accordance with the present invention, the instructions also include one or more user applications (e.g., games) and/or services, as well as the Lexicon Selector module 108.

The memory 94 may comprise solid state memory (e.g., ROM, DRAM, Flash, and the like), and/or a device capable of reading computer-readable media, such as optical or magnetic media. As seen in Figure 3, the memory 94 is configured to store the applications 106 and the Lexicon Selector module 108. The user I/O interface 96 comprises one or more controls and/or components that allow the user to control and interact with the device 90. Such controls and components include, but are not limited to, a display 98, a microphone 100, and a speaker 102. The communications interface 104 comprises any known interface known in the art. For example, the communication interface 104 may comprise a fully functional transceiver capable of communicating data with the LS 130 via the RAN 50 and/or WAP 60. The particular protocols and standards for communicating data via these interfaces is well-known and not germane to the present invention. Therefore, they are not described in detail here.

As previously stated, the Lexicon Selector module 108, when executed by controller detects the occurrence of a predetermined event. In response to the detection, the Lexicon Selector module 108 initiates a request to the LS 130 for a new dictionary, and provides the LS 130 with one or more parameters representing the user's current situational context. Once the LS 130 generates the dictionary, the Lexicon Selector 108 downloads the dictionary to device 90 and provisions the dictionary for use on device 90.

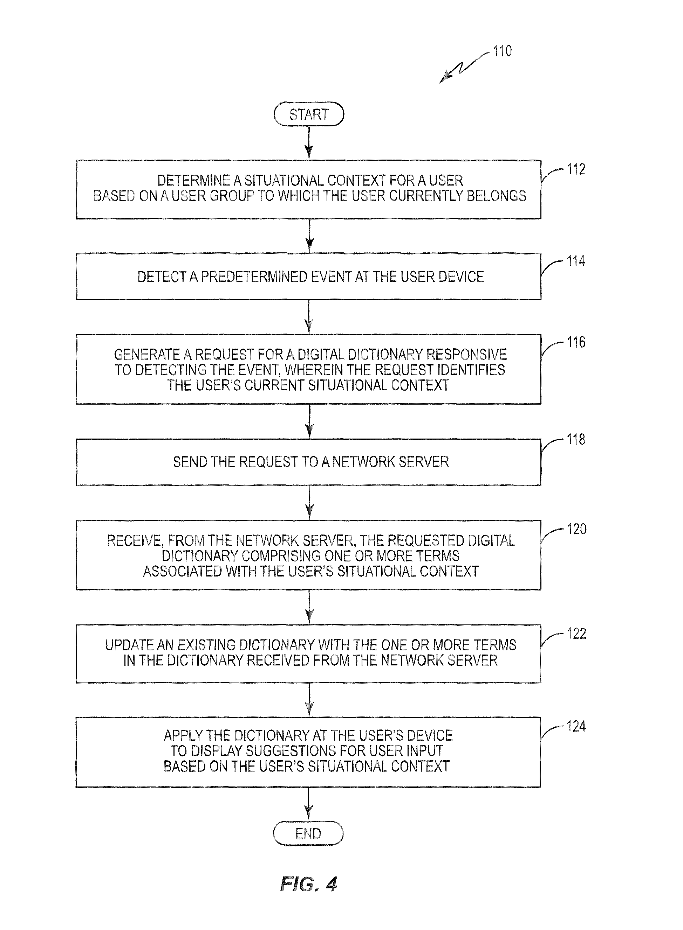

Figure 4 is a flow diagram illustrating a method 110 of requesting and obtaining a dynamically generated, group-related personalized dictionary from the LS 130 according to one embodiment of the present invention. The method 110 is performed at the user device 90.

Method 110 begins with the user device 90 determining a situational context for the user based in part on a user group to which the user currently belongs (box 112). Then, the Lexicon Selector module 108 at the user device 90 detects a predetermined event (box 114). The event may be any event known in the art, such as when the user turns the device 90 "on," or when the user changes from conversing group members of different groups, or when the user launches a particular user application, for example. Regardless of the trigger, however, the Lexicon Selector module 108 then generates a request message to request a digital dictionary from the LS 130. The request includes parameters describing the user's current situational context (box 116).

By way of example, the parameters may comprise a vector of contextual features currently associated with the user. The features may be user-specific and/or specific to the user's environment, and may be further defined by one or more feature-specific elements. Each feature-specific element is a set of values or labels, for example, that describes the corresponding contextual feature,

For example, in one embodiment, a vector may comprise the following contextual features - [date, time of day, season of year, region, occupation, associated groups, currently installed applications, current location, music being listened to, etc.]. Additionally, the "occupation" feature may comprise an element identifying the user as an "Engineer," while the "associated groups" feature defines the user as belonging to one or more groups of people with whom the user typically interacts (e.g., engineers and/or co-workers). Still other features, such as the "applications being used" feature, for example, would include elements identifying those applications (e.g., "Angry Birds," Farmville," etc.).

Once the parameters are collected, the Lexicon Selector module 108 sends the request message, including the vector of contextual features, to the LS 130 (box 118). The device 90 then waits to receive the dictionary in response to the request. Upon receipt of the requested dictionary, (box 120), the controller 92 updates an existing device dictionary with the terms received from the LS 130 in the response message (box 122), and applies the device dictionary to suggest words to the user based on user input and the user's current situational context (box 124).

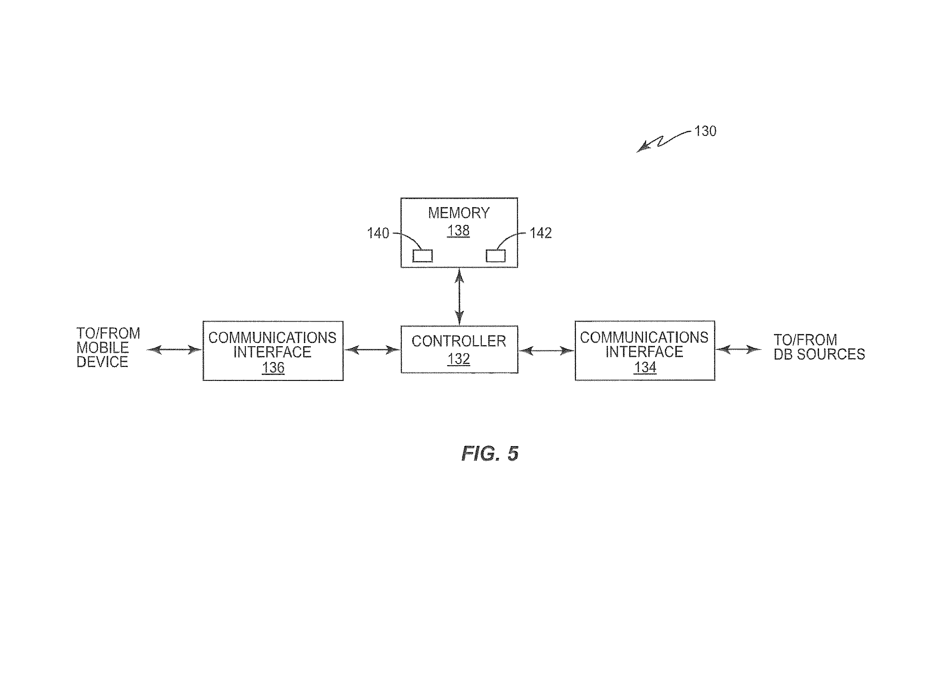

Figure 5 is a functional block diagram of the LS 130 configured according to one embodiment of the present invention. As seen in Figure 5, LS 130 comprises a programmable controller 132, a pair of communication interfaces 134, 136, and a memory 138, which may comprise solid state memory (e.g., ROM, DRAM, Flash, or a device capable of reading computer-readable media, such as optical or magnetic media).

The programmable controller 132 may comprise any of a variety of one or more programmable microprocessors that are configured to control the operation of LS 130 according to instructions and data stored in memory 138. Such instructions include, but are not limited to, the code necessary for performing communications functions, such as transmitting and receiving data to/from user device 10 via IP network 12 and one or more of the network servers GS 20, CM 30, and MS 40. According to one or more embodiments of the present invention, however, the code and instructions also include one or more lexica 140 and a control application 142.

In operation, the instructions that comprise the control application 142 are executed by controller 132. When executing, the control application 142 communicates with the Lexicon Selector 108 of the user device 90 via the communication interface 136, and with one or more of the GS 20, CM 30, and MS 40 via the second interface 134. Both communication interfaces 134, 136 utilize well-known protocols to establish, maintain, and communicate data over links, and thus, are not described herein in detail.

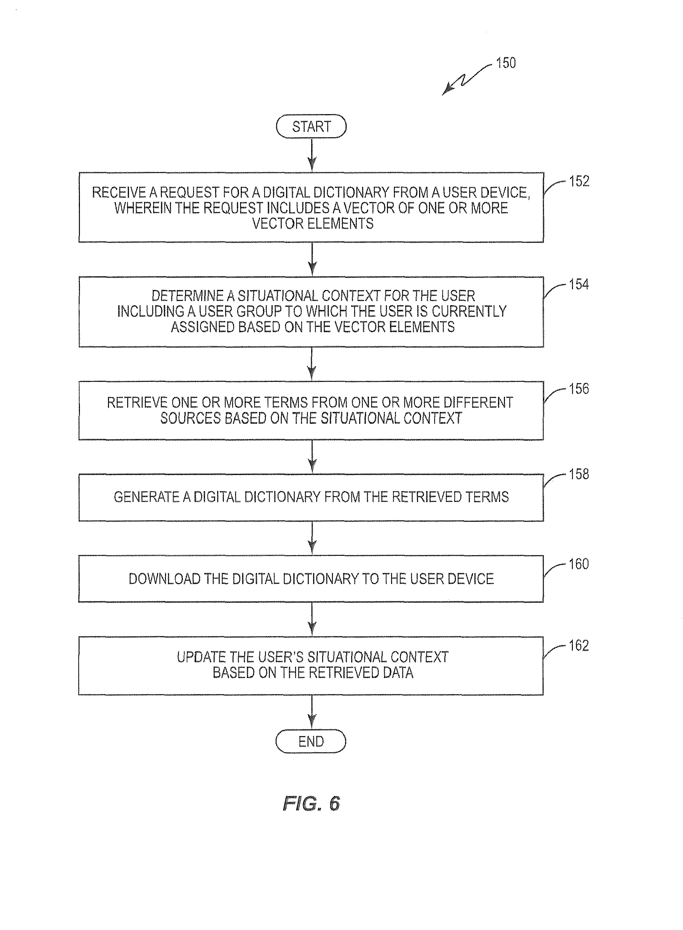

Figure 6 is a flow chart illustrating a method 150 of dynamically generating a group-related dictionary according to one embodiment of the present invention. The method 150, as seen in Figure 6, is performed by the controller 132 at the LS 130.

Method 150 begins with the LS 130 receiving a request for a digital dictionary from the user device 90 (box 152). The request may be explicit, such as when the user of device 90 manually or directly requests the dictionary by actuating a predetermined control, for example, or implicit, such as when the request is triggered in response to the user launching an application that uses the dictionary on device 90. As previously stated, the request message includes a vector of contextual features and corresponding elements that define the user's current situational context. Upon receiving the message, the LS 130 uses these vector parameters to determine the current situational context for the user. This includes identifying a user group to which the user currently belongs (box 154). The LS 130 then retrieves one or more terms from one or more different sources based on the situational context (box 156) and combines the terms to generate the requested digital dictionary for the user device 90 (box 158). Once generated, the LS 130 downloads the generated dictionary to the user device via the communication interface 136 (box 160), and updates the user's situational context based on the retrieved data (box 162).

As stated above, the user device 90 may not be configured to provide the LS 130 with user's current situational context. Even in cases where device 90 does provide such information, however, it may be useful for the LS 130 to obtain certain supplemental information. In such cases, the LS 130 may be configured to leverage the resources of one or more of the GS 20, the CM 30, and the MS 40 in order to determine the missing information and establish the user's situational context, or to supplement the existing information regarding the user's situational context.

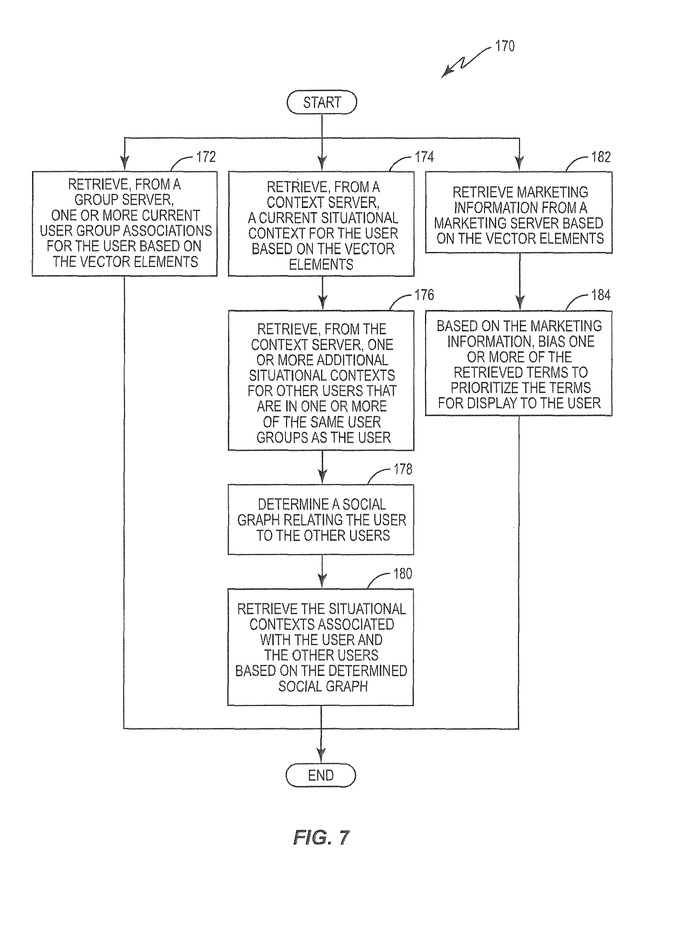

Figure 7 is a flow chart that illustrates a method 170 by which the LS 130 can retrieve information from the different servers (i.e., GS 20, CM 30, and MS 40) for use in identifying the user's current situational context, or supplementing the user's current situational context. In method 170, the LS 130, and more specifically the control application 142, communicates with the GS 20, the CM 30, and the MS 40 via interface 134. When communicating with the GS 20, the LS 130 may query the GS 20 to identify one or more current user group associations for the user based on the information provided in the received vector (box 172). For example, while the vector information may not explicitly identify a user group to which the user belongs, it may provide an identifier or other information which the LS 130 could use to obtain the user's current group associations. Once these associations are obtained, the LS 130 can explore the lexica 140 to retrieve one or more terms for use in creating the dictionary, and/or update the user's current situational context accordingly.

In another embodiment, the LS 130 may query the CM 30 based on the received vector features and/or elements to determine current context information for the user (block 174), and/or for the situational contexts of one or more other users (box 176). These other users may be, for example, users that are in one or more of the same user groups as the user. Information to determine such data may be provided by the device 90 in the request message, or may be retrieved from the GS 20. Once obtained, however, the LS 130 may utilize the information to automatically update the user's current situational context.

Additionally, the LS 130 may also query the CM 30 to retrieve a social graph that indicates how the user is related to other users in the same user group. As stated above, a social graph consists of linked nodes - each node indicating a person, for example, and each node connected to at least one other node by a link. The greater the distance between two nodes (e.g., the more links and nodes that exist between a pair of given nodes), the weaker the relationship is for those given nodes.

According to the present invention, the LS 130 can retrieve the situational contexts of the user, and of the other users in the user group, based for instance on the information gleaned from the social graph (box 180). Additionally, the LS 130 may be configured to update the user's current situational context, as well as that of the other users, based on the information provided by the social graph.

In another embodiment, the LS 130 may leverage the resources of the MS 40. For example, in one embodiment, the LS 130 may generate a query based on the vector features and elements supplied by the user device 90, and send the query to the MS 40 to retrieve marketing information (box 182). The marketing information retrieved is, in at least one embodiment, related to a user's specific situational context. Therefore, the LS 130 and/or the user device 90 may apply a function to bias or prioritize the suggestions provided by the device dictionary to the user (box 184).

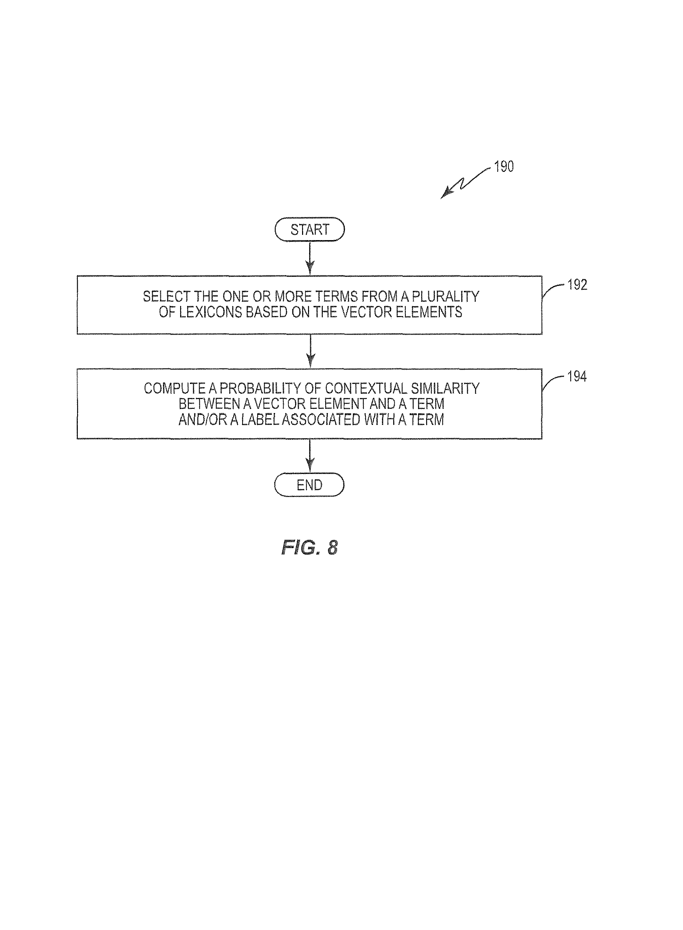

As previously stated, the information received from the user device 90 (i.e., vector features and/or the information gleaned from the other servers 20, 30, 40) are used to determine the user's situational context. As seen in method 190 of Figure 8, once the situational context is determined, the LS 130 can dynamically generate the desired device dictionary for the user device 90 by first selecting one or more terms from the plurality of lexica 140 (box 192). The LS 130 then utilizes any method known in the art to compute the probability of contextual similarity between an element in the vector and a given term in the lexica, and/or a label associated with a given term in the lexica (box 194). Based on the result, the LS 130 will determine whether the term will be included in the dictionary for the user. For example, results that indicate a high level of similarity (i.e., equal or exceeding a predetermined threshold) could cause the LS 130 to include the term in the dynamically generated dictionary. For results indicating a low degree of similarity, those terms may be discarded and not placed into the dictionary.

In another example, the LS 130 can calculate a distance based at least in part on semantics, and use that calculation to select a desired term from the dictionary. By way of example, consider a situation in which the term "Exploratorium" is a term contained in a regional lexicon and is associated with a label of "Bay Area." Consider also where the vector information that is received from the user includes the phrase "Northern California" as a Region element. In one embodiment, upon receiving the vector information from the user, the controller 132 of LS 130 could determine using any manner known in the art that the Bay Area is geographically near, or in, Northern California, and thereby select the term "Exploratorium" to include when generating the digital dictionary.

A similar process may be utilized for calculating distance based on sounds and/or symbols. Continuing the foregoing example, the controller 132 of LS 130 could receive a sound file or graphical symbol, or a link to such an object, in the vector information from the user. Upon receipt, the controller 132 could execute an application that analyzes the sound and/or symbol, and then uses the results of the analysis to find a matching sound or symbol in the lexicon. Provided the matching sound or symbol was associated with the term "Exploratorium," the controller 132 could calculate the distance between the geographical location of the "Exploratorium" and the user's current location, for example, and then add/not add the term "Exploratorium" to the dictionary being generated accordingly.

The present invention may, of course, be carried out in other ways than those specifically set forth herein without departing from essential characteristics of the invention. For example, the previous embodiments illustrate dynamically generating a group-related personalized device dictionary for a user device based on text that describes the user's situational context. However, the present invention is not limited solely to the use of alpha-numeric text. In other embodiments, the vector features and their corresponding elements may comprise non-text elements such as audible sounds (e.g., spoken words and music), graphical symbols, or the symbols of other languages, such as Japanese or Chinese.

For example, the strokes of Japanese and Chinese characters are performed in a certain order - i.e., from a starting position in an upper left corner of the symbol. Thus, the appropriate meaning for the character can be determined in the same way as the meaning for textual input, and there is no need to perform a text lookup operation to determine an appropriate meaning for a given symbol.

Therefore, the present embodiments are to be considered in all respects as illustrative and not restrictive, and all changes coming within the meaning and equivalency range of the appended claims are intended to be embraced therein

## Claims

1. A method for providing a digital dictionary to a user device, the method comprising:
determining a situational context for a user including a user group to which the user is currently assigned;
retrieving one or more terms from one or more different sources based on the situational context;
generating a digital dictionary from the retrieved terms; and
providing the digital dictionary to the user device.

2. The method of claim 1 further comprising receiving a request for the digital dictionary from the user device, the request including a vector of one or more vector elements.

3. The method of claim 2 wherein each vector element comprises one or more contextual features indicating a user's current environment and the user's associations to one or more user groups.

4. The method of claim 2 wherein retrieving one or more terms comprises selecting the one or more terms from a plurality of lexica based on the vector elements.

5. The method of claim 2 wherein at least one of the terms is selected based on a computed probability of contextual similarity between a vector element and one or more labels associated with the term.

6. The method of claim 2 wherein at least one of the terms is selected based on a computed probability of contextual similarity between a vector element and a term.

7. The method of claim 2 wherein at least one vector element comprises a non-text pattern, and wherein at least one of the terms is selected based on a determined meaning of the non-text pattern.

8. The method of claim 7 wherein the non-text pattern comprises an audio pattern or a graphics pattern.

9. The method of claim 2 wherein determining a situational context for a user comprises retrieving, from a group server, one or more current user group associations for the user based on the vector elements.

10. The method of claim 2 wherein determining a situational context for a user comprises retrieving, from a context server, a current situational context for the user based on the vector elements.

11. The method of claim 10 further comprising retrieving, from the context server, one or more additional situational contexts for other users that are in one or more of the same user groups as the user.

12. The method of claim 11 further comprising:
determining a social graph relating the user to the other users; and
retrieving the situational contexts associated with the user and the other users based on the determined social graph.

13. The method of claim 2 further comprising:
retrieving marketing information from a marketing server based on the vector elements; and
biasing one or more of the retrieved terms to prioritize the retrieved terms for display to the user based on the marketing information.

14. The method of claim 1 further comprising:
retrieving data from one or more network servers responsive to receiving a request for the digital dictionary from the user device; and
updating the user's situational context based on the retrieved data.

15. A network server configured to provide a digital dictionary to a user device, the server comprising:
a first communications interface configured to communicate information with a user device;
a second communications interface configured to retrieve data from one or more network sources; and
a controller communicatively connected to both the first and second communications interfaces, and configured to:
determine a situational context for a user including a user group to which the user is currently assigned;
retrieve one or more terms from the one or more network sources based on the situational context;
generate a digital dictionary from the retrieved terms; and
provide the digital dictionary to the user device.

16. The network server of claim 15 wherein the controller is further configured to receive a vector of one or more vector elements in a request for the digital dictionary from the user device, each vector element comprising one or more contextual features indicating a current environment for the user, and the user's associations to one or more user groups.

17. The network server of claim 16 wherein the controller is further configured to select the one or more terms from a plurality of lexica based on the vector elements.

18. The network server of claim 16 wherein the controller is further configured to:
compute a probability of contextual similarity between a vector element and one or more labels associated with a term; and
select the term based on the computed probability.

19. The network server of claim 16 wherein the controller is further configured to:
compute a probability of contextual similarity between a vector element and a term; and
select the term based on the computed probability.

20. The network server of claim 16 wherein at least one vector element comprises a non-text pattern, and wherein the controller is further configured to select at least one of the terms based on a context of the non-text pattern.

21. The network server of claim 16 wherein the controller is further configured to:
retrieve, from a group server, one or more current user group associations for the user based on the vector elements; and
determine the user's situational context based on the one or more current user group associations.

22. The network server of claim 16 wherein the controller is further configured to:
retrieve, from a context server, a current situational context for the user based on the vector elements; and
determine the user's situational context based on the current situational context.

23. The network server of claim 22 wherein the controller is further configured to retrieve, from the context server, one or more additional situational contexts for other users that are in one or more of the same user groups as the user.

24. The network server of claim 23 wherein the controller is further configured to:
determine a social graph indicating a relationship between the user and the other users; and
retrieve the situational contexts associated with the user and the other users based on the determined social graph.

25. The network server of claim 16 wherein the controller is further configured to:
retrieve marketing information from a marketing server based on the vector elements; and
bias one or more of the retrieved terms to prioritize the retrieved terms for display to the user based on the marketing information.

26. The network server of claim 16 wherein the controller is further configured to:
retrieve data from one or more network servers responsive to receiving a request for the digital dictionary from the user device; and
update the user's situational context based on the retrieved data.

27. A method for providing a digital dictionary to a user device, the method comprising:
detecting a predetermined event at the user device;
generating a request to a network server for a digital dictionary responsive to detecting the predetermined event, the request identifying a user's situational context including a user group to which the user currently belongs;
receiving the digital dictionary from the network server, the digital dictionary comprising one or more terms associated with the user's situational context; and
displaying selected terms in the digital dictionary based on the user's current situational context.

28. The method of claim 27 wherein the request further includes information related to an existing digital dictionary.

29. The method of claim 28 further comprising updating the existing digital dictionary based on the terms received from the network server.

30. The method of claim 27 further comprising utilizing the received digital dictionary as a complement to an existing digital dictionary already stored in memory at the user device.

31. The method of claim 27 further comprising determining the situational context based on the user group to which the user currently belongs, and a current environment for the user.

32. The method of claim 27 wherein the user's situational context comprises a vector of one or more vector elements, each vector element comprising one or more contextual features indicating the user's current environment and the user's associations to one or more user groups.

33. The method of claim 32 wherein at least one vector element comprises an audio pattern or a graphics pattern.

34. A user device configured to provide a digital dictionary, the method comprising:
a communications interface configured to communicate data between the user device and a network server;
a display configured to display objects to a user;
a user interface configured to receive user input; and
a controller configured to:
generate a request to the network server for the digital dictionary, the request identifying a user's situational context including a user group to which the user currently belongs;
receive the digital dictionary from the network server, the digital dictionary comprising one or more terms associated with the user's situational context; and
display selected terms in the digital dictionary on the display based on the user's current situational context.

35. The user device of claim 34 further comprising a memory having an existing digital dictionary stored thereon, and wherein the controller is further configured to generate the request to include information related to the existing digital dictionary.

36. The user device of claim 35 wherein the controller is further configured to update the existing digital dictionary based on the terms in the digital dictionary received from the network server.

37. The user device of claim 34 wherein the controller is further configured to store the received digital dictionary as a complement resource to an existing digital dictionary already available to the user device.

38. The user device of claim 34 wherein the controller is further configured to determine the user's situational context based on the user group to which the user currently belongs and a current environment for the user.

39. The user device of claim 34 wherein the user's situational context comprises a vector of one or more vector elements, each vector element comprising one or more contextual features indicating the user's current environment and the user's associations to one or more user groups.
